# EUROPEAN PATENT APPLICATION

(11) **EP 4 173 484 A1**
(43) Date of publication of application: **03.05.2023**
(21) Application number: 21216410.7
(22) Date of filing: 21.12.2021
(51) Int. Cl.: A01N 25/10, A01N 25/30, A01N 53/00, A01P 7/04

(54) **STABLE LIQUID PESTICIDAL COMPOSITION**

(30) Priority: 26.10.2021 IN 202141048875
(71) Applicant: Reckitt & Colman (Overseas) Hygiene Home Limited, Slough, Berkshire SL1 3UH (GB)
(72) Inventor: DAS, Avijit, 122002 Gurugram (IN); MAKKAPATI, Anil Kumar, 122002 Gurugram (IN); MARTINS, Mariana Even Oliveira, 05577-900 Sao Paulo (BR); NARENDRAN, Abhinandan, 122002 Gurugram (IN); NIEMIEC, Anna, 05577-900 Sao Paulo (BR); PAZIAN, Anielle Cristina Nozella do Amaral, 05577-900 Sao Paulo (BR); SHANMUGAM PERUMAL, Shanthakumar, 122002 Gurugram (IN); SHEEHY, Daniel James, Sydney, 2000 (AU); VERONEZE, Rafael, 05577-900 Sao Paulo (BR)
(74) Representative: Paredes Rojas, José Francisco

(57) **Abstract**

The present invention relates to a liquid pesticidal composition comprising: (i) a pesticidal mixture comprising, at least one polyalkyleneoxide modified heptamethyltrisiloxane and a matrix-forming agent selected from the group consisting of tetraethyl orthosilicate, tetramethyl orthosilicate, and combinations thereof; (ii) one or more alcohols selected from the group consisting of primary, secondary and tertiary alcohols having between 2 and 10 carbon atoms; and (iii) water. The invention also relates to a Method of immobilising and/or killing insects, comprising contacting the insects with the liquid pesticidal composition. It also relates to the use of the liquid pesticidal composition to kill an insect or insect population.

## Description

The present invention relates to a liquid pesticidal composition, to a Method of immobilising and/or killing insects and to the use of a liquid insecticidal composition to kill an insect or insect population.

### Background

Pesticides are used to kill insects, such as cockroaches, flies, ants, and spiders. Normally these pesticides contain toxic substances, which are well-known in the art; for example, pyrethroids, which kill insects through a neuro-toxicant mechanism.

Some drawbacks of pyrethroids are that these may be harmful to domestic pets, to the environment and these should not be used around food preparation areas.

Document WO2016/061259 describes pesticidal compositions for controlling pests and pathogens with a physical mode of action. The compositions comprise trisiloxane surfactants and matrix-forming agents. Because of the ingredients in the compositions, these are safe to humans and domestic pets, and environmentally benign. However, when these are mixed with water, the compositions are not stable.

Therefore, there is a need of a pesticidal composition with a physical mode of action, which when mixed with water remains stable for at least 2 years.

It is an object of the present invention to provide a ready-to-use liquid pesticidal composition comprising water, which has a physical mode of action and remains stable for at least 2 years. Because the composition comprises water, this would not need to be further diluted and can be sold "as is", meaning that it is shelf stable.

It is an object of the present invention to provide a method of immobilising and/or killing insects.

### Summary of the invention

In a first aspect, the present invention relates to a liquid pesticidal composition comprising:
- a pesticidal mixture comprising:
   ∘ at least one polyalkyleneoxide modified heptamethyltrisiloxane having formula: 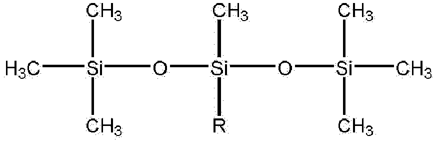 wherein
      R is -(CH₂)₃-(OCH₂CH₂)ₙOR₁
      R₁ is -H, -CH₃, or -O(O)CCH₃; and
      n is 2 to 20;
   ∘ a matrix-forming agent selected from the group consisting of tetraethyl orthosilicate, tetramethyl orthosilicate, and combinations thereof;
- one or more alcohols selected from the group consisting of primary, secondary and tertiary alcohols having between 2 and 10 carbon atoms; and
- water.

In one embodiment, the pesticidal mixture comprises between 80 wt.% and 99.9 wt.% of the at least one polyalkyleneoxide modified heptamethyltrisiloxane, based on the total weight of the pesticidal mixture, preferably between 85 wt.% and 99.5 wt.%, more preferably between 90 wt.% and 99 wt.%, even more preferably between 95 wt.% and 99 wt.%.

In another embodiment, the pesticidal mixture comprises between 0.1 wt.% to 20 wt.% of the matrix-forming agent, based on the total weight of the pesticidal mixture, preferably between 0.5 wt.% and 10 wt.%, more preferably between 0.75 wt.% and 5 wt.%, even more preferably between 1 wt.% and 2 wt.%.

In an embodiment, the composition comprises between 0.1 wt.% and 20 wt.% of the pesticidal mixture, based on the total weight of the composition, preferably between 0.25 wt.% and 15 wt.%, more preferably between 0.5wt.% and 10 wt.%, even more preferably between 1 wt.% and 5 wt.%, most preferably between 1.5 wt.% and 2.5 wt.%.

In another embodiment, the composition comprises between 0.5 wt.% and 50 wt.% of the one or more alcohols, based on the total weight of the composition, preferably between 1 wt.% and 30 wt.%, more preferably between 2.5 wt.% and 25 wt.%, even more preferably between 5 wt.% and 20 wt.%, most preferably between 5 wt.% and 15 wt.%.

In a preferred embodiment, the one or more alcohols are selected from the group consisting of ethanol, isopropanol, and mixtures thereof, preferably the alcohol is isopropanol.

In a preferred embodiment, the composition comprises at least 30 wt.% water, based on the total weight of the composition, preferably at least 50 wt.%, more preferably at least 60 wt.%, even more preferably between 70 wt.% and 95 wt.%.

In an embodiment, the composition further comprises at least one active agent selected from the group consisting of pyrethroids, essential oils, and combinations thereof.

In a preferred embodiment, the composition has a pH of between 4 and 8 measured at 20°C, preferably between 5 and 7.

In a second aspect, the invention relates to a method of immobilising and/or killing insects, comprising contacting the insects with the liquid pesticidal composition according to any of the preceding claims, preferably wherein the insects are crawling insects or flying insects.

In one embodiment, the method comprises contacting the insects with from 1 g to 20 g of the liquid pesticidal composition according to the first aspect of the invention, preferably with from 2 g to 15 g, more preferably with from 2.5 g to 10 g, even more preferably with from 2.5 to 6.0 g.

In another embodiment, the method comprises contacting the crawling insects with from 2 g to 20 g of the liquid pesticidal composition according to the first aspect of the invention, preferably with from 3 g to 15 g, more preferably with from 4 g to 10 g, even more preferably with from 4.5 to 6.0 g.

In another embodiment, the method comprises contacting the flying insects with from 1 g to 20 g of the liquid pesticidal composition according to first aspect of the invention, preferably with from 1.5 g to 15 g, more preferably with from 2 g to 10 g, even more preferably with from 2.5 to 3.5 g.

In a third aspect, the invention relates to the use of the liquid pesticidal composition according to the first aspect of the invention to knock-down and/or kill an insect or insect population, preferably wherein the insect or insect population are crawling insects or flying insects.

### Definitions

The following definitions are used in the present application.

"Pesticidal composition" as used in the present application means a composition capable of killing a pest, in particular insects, such as crawling insects.

"Pesticidal activity tests" as used in the present application means the tests that were carried out to determine the bio-efficacy of the tested composition or products.

When testing crawling insects, the pesticidal activity or bio-efficacy was determined based on the methodology described in the Anvisa Manual - *"Teste de Eficacia em aerossóis frente a insetos rasteiros",* against cockroach species *Periplaneta americana,* grown in insect rearing under controlled humidity, temperature and photoperiod conditions. An insect sample of 10 adult roaches were subjected to the test, and each test was repeated three times. The sample of 10 insects were placed in a stainless-steel container with internal walls treated with liquid Vaseline. This container was introduced into a PVC tube, and the pesticidal product or the pesticidal composition to be tested was applied 5 times (i.e., when using a spray it was sprayed 5 times) at a distance of 45 cm from the tube. The knock-down (KD) was registered for a period of 20 minutes; after this, the insects were removed and placed in insecticide-free plastic containers. The insects in the insecticide-free plastic containers were fed and their mortality was observed up to 72 hours.

"KD50 or KD₅₀" as used in the present application means, the time, in seconds, needed to paralyse or knock-down 50% of the insects in a test. For example, if the sample size in a test is of 10 insects, then the KD50 or KD₅₀ is the time, in second, needed to paralyse 5 insects. By paralyse or knock-down is meant that the insects cannot move, take off or stand.

"KD90 or KD₉₀" as used in the present application means, the time, in seconds, needed to paralyse or knock-down 90% of the insects in a test. For example, if the sample size in a test is of 10 insects, then the KD90 or KD₉₀ is the time, in second, needed to paralyse 9 insects. By paralyse or knock-down is meant that the insects cannot move, take off or stand.

"Stability" as used in the present application means that the composition according to the present invention does not exhibit a phase separation after 4 weeks at 50°C, or up to 6, 12, 18, 24, 30, 36, 40 or 48 months at a temperature of about 20°C.

"Mortality" as used in the present application means, the percentage (%) of insects in a test that die within a period of 72 hours. In the present application a pesticidal product or a pesticidal composition is considered to have a satisfactory bio-efficacy, when the mortality is of at least 90% ± 10%.

### Detailed description of the invention

In a first aspect, the present invention relates to a liquid pesticidal composition comprising:
- a pesticidal mixture comprising:
   ∘ at least one polyalkyleneoxide modified heptamethyltrisiloxane having formula: 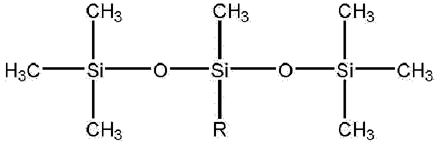 wherein
      R is -(CH₂)₃-(OCH₂CH₂)ₙOR₁
      R₁ is -H, -CH₃, or -O(O)CCH₃; and
      n is 2 to 20;
   ∘ a matrix-forming agent selected from the group consisting of tetraethyl orthosilicate, tetramethyl orthosilicate, and combinations thereof;
- one or more alcohols selected from the group consisting of primary, secondary and tertiary alcohols having between 2 and 10 carbon atoms; and
- water.

The present inventors have observed that by adding one or more alcohols selected from the group consisting of primary, secondary and tertiary alcohols having between 2 and 10 carbon atoms, to a composition comprising a polyalkyleneoxide modified trisiloxane, a matrix forming agent, and water, the composition remains stable for a longer period of time. Without being bound to any theory, it is believed that when the at least polyalkylenoxide modified heptamethyltrisiloxane, the matrix-forming agent and water are mixed, a hydrolysis reaction takes place, which is evidenced by a phase separation of the composition; this leads to a destabilisation of the composition. However, it is believed that when one or more alcohols are added to the composition, the hydrolysis reaction is slowed down, and hence the composition is stabilised.

The pesticidal mixture is described in document WO2016/061259 and it is commercially available as Provecta ^{®} ex. ICB Pharma.

The pesticidal mixture may comprise between 80 wt.% and 99.9 wt.% of the at least one polyalkyleneoxide modified heptamethyltrisiloxane, based on the total weight of the pesticidal mixture, preferably between 85 wt.% and 99.5 wt.%, more preferably between 90 wt.% and 99 wt.%, even more preferably between 95 wt.% and 99 wt.%.

The pesticidal mixture may comprise between 0.1 wt.% to 20 wt.% of the matrix-forming agent, based on the total weight of the pesticidal mixture, preferably between 0.5 wt.% and 10 wt.%, more preferably between 0.75 wt.% and 5 wt.%, even more preferably between 1 wt.% and 2 wt.%

The composition may comprise between 0.1 wt.% and 20 wt.% of the pesticidal mixture, based on the total weight of the composition, preferably between 0.25 wt.% and 15 wt.%, more preferably between 0.5 wt.% and 10 wt.%, even more preferably between 1 wt.% and 5 wt.%, most preferably between 1.5 wt.% and 2.5 wt.%.

The present inventors have observed that when the pesticidal composition comprises between 1.5 wt.% and 2.5 wt.%, the stabilisation effect provided by the one or more alcohols is better evidenced.

The composition may comprise between 0.5 wt.% and 50 wt.% of the one or more alcohols, based on the total weight of the composition, preferably between 1 wt.% and 30 wt.%, more preferably between 2.5 wt.% and 25 wt.%, even more preferably between 5 wt.% and 20 wt.%, most preferably between 5 wt.% and 15 wt.%.

The one or more alcohols are preferably selected from the group consisting of primary and secondary alcohols having between 2 and 5 carbon atoms. The one or more alcohols may be selected from the group consisting of ethanol, isopropanol, and mixtures thereof, preferably the alcohol alcohol is isopropanol.

The present inventors have observed that excellent stabilisation of the pesticidal composition is obtained with isopropanol. When using isopropanol, the present inventors have observed that the shelf-life stability of the composition can be extended to, for example, 6, 12, 18, 24, 30, 36, 40 or 48 months.

In certain embodiments, the compositions according to the present invention exhibit a shelf-life stability of about 2, 3, or 4 years. In some embodiment, the composition has the shelf-life stability of about, for example, 2 years.

The inventors have surprisingly observed that addition of lower alcohols dramatically improve the stability of the liquid pesticidal compositions. When the composition does not contain any alcohol, the shelf-life stability of the compositions, is much shorter.

The composition is a liquid pesticidal composition and it may comprise at least 30 wt.% water, based on the total weight of the composition, preferably at least 50 wt.%, more preferably at least 60 wt.%, even more preferably between 70 wt.% and 95 wt.%. Then it will be understood that the composition may be an aqueous liquid pesticidal composition.

Although the mode of action of the liquid pesticidal composition of the invention is a physical mode of action, meaning that a pest sample is trapped in a three-dimensional network, which immobilises the pest (e.g., roaches), the pesticidal properties of the composition may be further enhanced by adding at least one active agent to the composition. Therefore, in an embodiment the composition further comprises at least one active agent selected from the group consisting of pyrethroids, essential oils, and combinations thereof.

The pyrethroids may be selected from the group consisting of acrinathrin, allethrin, d-allethrin, d-trans-allethrin, d-cis-trans-allethrin,alphamethrin, bathrin, bifenthrin, bioallethrin, S-bioallethrin, bioallethrin S-cyclopentyl isomer, bioethanomethrin, biopermethrin, bioresmethrin, clocythrin, chlovaporthrin, cycloprothrin, cyfluthrin, beta-cyfluthrin, cyhalothrin, gamma-cyhalothrin, lambda-cyhalothrin, cypermethrin, alphacypermethrin, beta-cypermethrin, cis-cypermethrin, theta-cypermethrin, zeta-cypermethrin, cyphenotrin, deltamethrin, depallethrin, empenthrin, empenthrin (1R isomer), biothrin, esbiothrin, esfenvalerate, etophenprox, fenfluthrin, fenpropathrin, fenpyrithrin, fenvalerate, flubrocythrinate, flucythrinate, flumethrin, fubfenprox, imiprothrin, kadethrin, metofluthrin, neopynamine, permethrin, cispermethrin, trans-permethrin, phenothrin, phenothrin (IR-trans isomer), d-phenothrin, prallethrin, profluthrin, protrifenbute, pynamin forte, pyresmethrin, pyrethrin, resmethrin, cis-resmethrin, silafluofen, tau-fluvalinate, tefluthrin, tetramethrin (phthalthrin), tetramethrin (1R isomer),terallethrin, tralomethrin, transfluthrin, metofluthrin, pyrethrins (pyrethrum) and any mixture of the abovementioned substances.

Particularly preferred pyrethroids include transfluthrin, metofluthrin and biothrin.

The term "essential oils" as used herein means volatile and aromatic liquids which are isolated by a physical process from an odoriferous plant of a single botanical species. The oil bears the name of the plant from which it is derived; for example, rose oil or lavender oil. These essential oils obtained from plants may be extracted by distillation, steam distillation, expression or by extraction with fats or organic solvents. Examples of essential oils are rose oil, lavender oil, peppermint oil, citronella oil, clove oil, geranium oil, mint oil, lemon grass oil, garlic oil, thyme oil, cedar oil, cornmint oil and cinnamon oil.

The liquid pesticidal composition may have a pH of between 4 and 8 measured at 20°C, preferably between 5 and 7.

It is important to maintain the pH of the composition close to neutral to slightly alkaline conditions, as this seems to have an effect on the stabilisation of the composition. It is believed that by doing this hydrolysis is reduced.

In a preferred embodiment, the liquid insecticidal composition consists of:
- between 0.1 wt.% and 20 wt.% of a pesticidal mixture, based on the total weight if the composition, preferably between 0.25 wt.% and 15 wt.%, more preferably between 0.5 wt.% and 10 wt.%, even more preferably between 1 wt.% and 5 wt.%, most preferably between 1.5 wt.% and 2.5 wt.%; wherein the pesticidal mixture comprises:
   ∘ between 80 wt.% and 99.9 wt.% of the at least one polyalkyleneoxide modified heptamethyltrisiloxane, based on the total weight of the pesticidal mixture, preferably between 85 wt.% and 99.5 wt.%, more preferably between 90 wt.% and 99 wt.%, even more preferably between 95 wt.% and 99 wt.%;
      wherein the at least one polyalkyleneoxide modified heptamethyltrisiloxane has the formula: 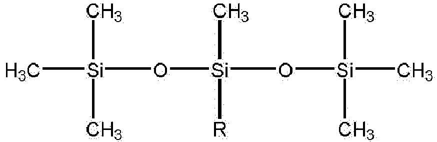 wherein
      R is -(CH₂)₃-(OCH₂CH₂)ₙOR₁
      R₁ is -H, -CH₃, or -O(O)CCH₃; and
      n is 2 to 20;
   ∘ between 0.1 wt.% to 20 wt.% of a matrix-forming agent, based on the total weight of the pesticidal mixture, preferably between 0.5 wt.% and 10 wt.%, more preferably between 0.75 wt.% and 5 wt.%, even more preferably between 1 wt.% and 2 wt.%;
      wherein the matrix-forming agent is selected from the group consisting of tetraethyl orthosilicate, tetramethyl orthosilicate, and combinations thereof;
- between 0.5 wt.% and 50 wt.% of isopropanol, based on the total weight of the composition, preferably between 1 wt.% and 30 wt.%, more preferably between 2.5 wt.% and 25 wt.%, even more preferably between 5 wt.% and 20 wt.%, most preferably between 5 wt.% and 15 wt.%.; and
- at least 30 wt.% water, based on the total weight of the composition, preferably at least 50 wt.%, more preferably at least 60 wt.%, even more preferably between 70 wt.% and 95 wt.% wherein the composition has a pH of between 4 and 8 measured at 20°C, preferably between 5 and 7.

In a second aspect, the invention relates to a method of immobilising and/or killing insects, comprising contacting the insects with the liquid pesticidal composition according to the first aspect of the invention, preferably wherein the insects are crawling insects or flying insects.

In an embodiment, the present method achieves at least 95%, 96%, 97%, 98%, 99% or 100% mortality rate of the insects of interest. In some embodiments, the killing is achieved at a 100% mortality rate.

In another embodiment, the present method achieves a KD50 at most at 100 s, preferably at most at 90 s, more preferably at most at 80 s, even more preferably at most at 70 s, most preferably at most at 60 s, such as at most 40 s.

In another embodiment, the present method achieves a KD90 at most at 200 s, preferably at most at 190 s, more preferably at most at 180 s, even more preferably at most at 170 s, most preferably at most at 160 s, such as at most 120 s or 110 s.

The person skilled in the art will understand that the amount of liquid insecticidal composition that needs to be applied will depend on the number of insects upon which the composition will be applied. However, in an embodiment, the method comprises contacting the insects with from 2 g to 20 g of the liquid pesticidal composition, preferably with from 3 g to 15 g of the liquid pesticidal composition, more preferably with from 4 g to 10 g of the liquid pesticidal composition, even more preferably with from 4.5 to 6.0 g of the liquid pesticidal composition.

When the insects are crawling insects, the method may comprise contacting the crawling insects with from 2 g to 20 g of the liquid pesticidal composition according to the first aspect of the invention, preferably with from 3 g to 15 g, more preferably with from 4 g to 10 g, even more preferably with from 4.5 to 6.0 g.

When the insects are flying insects, the method may comprise contacting the flying insects with from 1 g to 20 g of the liquid pesticidal composition according to the first aspect of the invention, preferably with from 1.5 g to 15 g, more preferably with from 2 g to 10 g, even more preferably with from 2.5 to 3.5 g.

The liquid insecticidal composition may be applied using an aerosol device or a spraying device, preferably using a spraying device.

When an aerosol device is used, the liquid insecticidal composition is mixed with a propellant to produce an aerosol insecticidal composition. When a spraying device is used such a propellant is not needed.

Amongst the propellants that may be used are hydrocarbons and compressed gas, of which hydrocarbons are preferred.

Hydrocarbon propellants which may be used are acetylene, methane, ethane, ethylene, propane, nbutane, n-butene, isobutane, isobutene, pentane, pentene, isopentane and isopentene. Mixtures of these propellants may also be used. Commercially available propellants typically contain a number of hydrocarbon gases. For example, an odorised commercial butane, contains predominantly n-butane and some iso-butane together with small amounts of propane, propene, pentane and butene.

Preferred hydrocarbon propellants include propane, n-butane, isobutane, pentane and isopentane, whilst the most preferred are propane, iso-butane and n-butane.

Particularly preferred hydrocarbon propellants are mixtures of propane, n-butane and iso-butane.

In a preferred embodiment the propellant is liquefied petroleum gas, also known as LPG and LP gas.

Given the high amount of water that the liquid insecticidal composition may comprise, when the composition is applied using a spraying device, the composition is just provided in the spraying device and sprayed directly from it. Hence, in a preferred embodiment,

In a third aspect, the invention relates to the use of the pesticidal composition according to the first aspect of the invention to knock-down and/or kill an insect or insect population, preferably wherein the insect or insect population are crawling insects or flying insects.

Examples of crawling insects are: Black Ants (*Ochetellus glaber*), Brown Ants (*Pheidole megacephala*), Spiders (*Mixed Species*), American Cockroaches (*Periplaneta americana*) and German Cockroaches (*Blattella germanica*).

Examples of flying insects are: Mosquitoes (*Culex quinquefasciatus*), houseflies (*Musca domestica*) and moths (*Helicoverpa armígera*).

The foregoing aspects may be freely combined with any of the foregoing aspects disclosed herein.

The invention will be further described, by way of example, with the reference to the following non-limiting embodiments.

### Examples

### Formulations

Formulations according to the invention and not according to the invention were prepared. The composition of these formulations is shown in the following Table.

**Table 1. Formulations**

| Ingredient | Formulation (wt.%) | | | | | | | |
|---|---|---|---|---|---|---|---|---|
| | A | B | 1 | 2 | 3 | 4 | 5 | 6 |
| Pesticidal mixture* | 2 | 3 | 2 | 2 | 2 | 3 | 3 | 3 |
| Isopropanol | 0 | 0 | 5 | 10 | 25 | 5 | 10 | 25 |
| Water | q.s. | q.s. | q.s. | q.s. | q.s. | q.s. | q.s. | q.s. |

| | | | | | | | | |
|---|---|---|---|---|---|---|---|---|
| * The pesticidal mixture contains a polyalkyleneoxide modified heptamethyltrisiloxane and a matrix-forming agent selected from the group consisting of tetraethyl orthosilicate, tetramethyl orthosilicate, and combinations thereof. The pesticidal mixture is commercially available as Provecta ^{®} ex. ICB Pharma. | | | | | | | | |

### Performance tests

### Stability and pesticidal activity

Stability of the formulations shown in Table 1 after 4 weeks at 50°C is shown in Table 2. It should be noted that these stability test simulates the performance of the samples after 2 years at a temperature of about 20°C.

The pesticidal activity of the formulations was determined by measuring the Mortality, KD50 and KD90 of a population of American cockroaches. The formulations were applied using a spraying device (meaning that it was not an aerosol, i.e., it did not have a propellant) and the values of three tests were reported as average.

**Table 2. Stability and bio-efficacy results**

| Formulation | Parameter | | | | | | | |
|---|---|---|---|---|---|---|---|---|
| | pH initial | pH final | pH decay | KD 50 (s) | KD 90 (s) | Mortality (%) | Amount sprayed (g) | Phase separation final |
| A (0%) | 6.99 | 5.21 | 1.78 | 150 | 240 | 95 | 5.68 | No |
| B (0%) | 6.91 | 3.70 | 3.21 | - | - | 10 | 5.28 | Yes |
| 1 (5%) | 6.74 | 5.43 | 1.31 | 50 | 60 | 100 | 5.28 | No |
| 2 (10%) | 6.78 | 5.18 | 1.60 | 50 | 120 | 100 | 5.23 | No |
| 3 (25%) | 6.96 | 5.65 | 1.31 | 40 | 150 | 100 | 5.05 | No |
| 4 (5%) | 6.78 | 4.63 | 2.15 | 90 | 150 | 100 | 5.47 | Yes |
| 5 (10%) | 6.83 | 4.63 | 2.20 | 60 | 180 | 95 | 5.51 | Yes |
| 6 (25%) | 6.97 | 4.94 | 2.03 | 60 | 120 | 100 | 4.99 | Yes |

In Table 2, when phase separation was observed, also crystallisation was observed. It is believed that phase separation and crystallisation result as a consequence of hydrolysis within the formulations. Such hydrolysis is reduced when an alcohol, in this case isopropanol, is added to the formulations.

If should be noted that the formulations comprising an alcohol not only are more stable, but they also produce excellent results in terms of bio-efficacy. The formulations are able to kill insects by trapping them in a polymeric web, which does not affect the nervous system of the insects, as pyrethroids do.

Hence one or more objects of the present invention are achieved by the present which is further elucidated in the appended claims.

## Claims

1. Liquid pesticidal composition comprising:
- a pesticidal mixture comprising:
∘ at least one polyalkyleneoxide modified heptamethyltrisiloxane having formula: 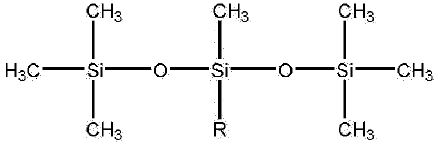 wherein
R is -(CH₂)₃-(OCH₂CH₂)ₙOR₁
R₁ is -H, -CH₃, or -O(O)CCH₃; and
n is 2 to 20;
∘ a matrix-forming agent selected from the group consisting of tetraethyl orthosilicate, tetramethyl orthosilicate, and combinations thereof;
- one or more alcohols selected from the group consisting of primary, secondary and tertiary alcohols having between 2 and 10 carbon atoms; and
- water.

2. Liquid pesticidal composition according to claim 1, wherein the pesticidal mixture comprises between 80 wt.% and 99.9 wt.% of the at least one polyalkyleneoxide modified heptamethyltrisiloxane, based on the total weight of the pesticidal mixture, preferably between 85 wt.% and 99.5 wt.%, more preferably between 90 wt.% and 99 wt.%, even more preferably between 95 wt.% and 99 wt.%.

3. Liquid pesticidal composition according to claim 1 or claim 2, wherein the pesticidal mixture comprises between 0.1 wt.% to 20 wt.% of the matrix-forming agent, based on the total weight of the pesticidal mixture, preferably between 0.5 wt.% and 10 wt.%, more preferably between 0.75 wt.% and 5 wt.%, even more preferably between 1 wt.% and 2 wt.%

4. Liquid pesticidal composition according to any of the preceding claims, wherein the composition comprises between 0.1 wt.% and 20 wt.% of the pesticidal mixture, based on the total weight of the composition, preferably between 0.25 wt.% and 15 wt.%, more preferably between 0.5 wt.% and 10 wt.%, even more preferably between 1 wt.% and 5 wt.%, most preferably between 1.5 wt.% and 2.5 wt.%.

5. Liquid pesticidal composition according to any of the preceding claims, wherein the composition comprises between 0.5 wt.% and 50 wt.% of the one or more alcohols, based on the total weight of the composition, preferably between 1 wt.% and 30 wt.%, more preferably between 2.5 wt.% and 25 wt.%, even more preferably between 5 wt.% and 20 wt.%, most preferably between 5 wt.% and 15 wt.%.

6. Liquid pesticidal composition according to any of the preceding claims wherein the one or more alcohols are selected from the group consisting of ethanol, isopropanol, and mixtures thereof, preferably the alcohol is isopropanol.

7. Liquid pesticidal composition according to any of the preceding claims, wherein the composition comprises at least 30 wt.% water, based on the total weight of the composition, preferably at least 50 wt.%, more preferably at least 60 wt.%, even more preferably between 70 wt.% and 95 wt.%.

8. Liquid pesticidal composition according to any of the preceding claims, wherein the composition further comprises at least one active agent selected from the group consisting of pyrethroids, essential oils, and combinations thereof.

9. Liquid pesticidal composition according to any of the preceding claims, wherein the composition has a pH of between 4 and 8 measured at 20°C, preferably between 5 and 7.

10. Method of immobilising and/or killing insects, comprising contacting the insects with the liquid pesticidal composition according to any of the preceding claims, preferably wherein the insects are crawling insects or flying insects.

11. Method according to claim 10, wherein the method comprises contacting the insects with from 1 g to 20 g of the liquid pesticidal composition according to any of the claims 1-9, preferably with from 2 g to 15 g, more preferably with from 2.5 g to 10 g, even more preferably with from 2.5 to 6.0 g.

12. Method according to claim 10 or claim 11, wherein the insects are crawling insects and the method comprises contacting the crawling insects with from 2 g to 20 g of the liquid pesticidal composition according to any of the claims 1-9, preferably with from 3 g to 15 g, more preferably with from 4 g to 10 g, even more preferably with from 4.5 to 6.0 g.

13. Method according to claim 10 or claim 11, wherein the insects are flying insects and the method comprises contacting the flying insects with from 1 g to 20 g of the liquid pesticidal composition according to any of the claims 1-9, preferably with from 1.5 g to 15 g, more preferably with from 2 g to 10 g, even more preferably with from 2.5 to 3.5 g.

14. Use of the liquid pesticidal composition according to any of the claims 1-9 to knock-down and/or kill an insect or insect population, preferably wherein the insect or insect population are crawling insects or flying insects.
